# EUROPEAN PATENT APPLICATION

(11) **EP 4 553 051 A1**
(43) Date of publication of application: **14.05.2025**
(21) Application number: 23208256.0
(22) Date of filing: 07.11.2023
(51) Int. Cl.: C03C 17/00, C03C 17/34

(54) **GLAZING WITH LOW-EMISSIVITY COATING AND ENHANCED BENDABILITY**

(71) Applicant: AGP Worldwide Operations GmbH, 6300 Zug (CH)
(72) Inventor: KRASNOV, Alexey, Canton, Michigan, 48188 (US); BENITO GUTIERREZ, Guillermo, 6300 Zug (CH); MORA, Paulo, Canton, Michigan, 48188 (US)
(74) Representative: ABG Intellectual Property Law, S.L.

(57) **Abstract**

The present invention falls in the field of glazing and more particularly, it relates to glazing comprising a low-emissivity coating, such as automotive glazing or architectural glazing. The invention also relates to a method for manufacturing such glazing.

## Description

### FIELD OF THE INVENTION

The present invention falls in the field of glazing and more particularly, it relates to glazing comprising a low-emissivity coating, such as automotive glazing or architectural glazing. The invention also relates to a method for manufacturing such glazing.

### BACKGROUND

Energy-efficiency vehicles are entering the consumer marketplace at an accelerated pace. In order to enable thermal comfort of the driver and the passengers at a reduced cost for heating and cooling of the cabin, modern automotive glazing with added value in form of thermal insulating coatings have widely been used.

For glass sunroofs, for example, a solar-control and a low-emissivity (low-E) coating can often be found in many vehicle models. The role of the solar control coating is to limit the amount of direct solar sunlight penetrating the cabin, while the role of the low-emissivity coating is to reduce the heat exchange between the vehicle interior and the environment through re-radiation of the absorbed light in the mid-infrared portion of the spectrum.

Solar-control coatings are traditionally based on silver-inclusive functional layers, such as a triple-silver (Ag3) thin-film stack. The low-E coatings are usually disposed on the innermost surface of the sunroof and are typically based on indium-tin-oxide (ITO), a mechanically robust and chemically stable semiconductor material having high visible light transmittance (TL). Both types of coatings are traditionally deposited in large-area production coaters using magnetron DC sputtering process. By carefully selecting the layer materials and adjusting their optical and mechanical parameters, high-efficiency coatings of both types are currently being produced on industrial scale.

Bending of modern glass layers is usually performed using gravity bending or in combination with press bending. Gravity bending is a process in which a glass layer is heated to its softening temperature at which it sags under gravity to its final shape. The typical process uses a female mold that supports the glass layer near its periphery. Then, in a particular case, such as two layers of glass that later on are going to be laminated, the outer glass layer is placed on the mold first and the inner glass layer is stacked on top of it. The advantage of this process is that no contact is made with the surface of the glass layer during heating and forming, which lessens the probability of defects to appear. Also, during the bending process, the two flat glass layers may be stacked onto the same mold and bent as a pair, which guarantees a good match required for good optics and durability.

In addition to gravity bending, a full or partial surface press bending can be used, especially in the final stages of the process. Another option is the so-called singlet pressing in which the inner and outer glass layers are bent separately. Each layer of hot glass is mated with the surface of the press and, after cooling, the two layers of bent glass are laminated together.

Modern bending methods allow creating intricate and complex shapes with accentuated curvature in multiple directions and with small radii. Some shapes, referred here as feature lines, are formed via local heating of the glass by laser beam or another source of concentrated heat energy in addition, or instead, of the heat supplied by another bending process(es). The feature lines radii can range from just under 100 mm and up.

In most common automotive glazing, two layers of coated and bent glass are laminated together with a plastic bonding layer, such as polyvinyl butyral (PVB). Automotive grade PVB has an index of refraction that is matched to soda-lime glass to minimize secondary images caused by reflections at the PVB/Glass interface inside the laminate.

Another trend in modern automotive glazing is associated with the quest for a better aesthetics and enhanced aerodynamic performances, both resulting in more aggressive shapes of the glazing.

Generating the curvature of the glass layers during the bending process inevitably faces the challenge of thin-film coating cracking. This challenge is known to be particularly notorious in case of crystalline ITO which exhibits increased brittleness at thicknesses sufficient to achieve a required low-emissivity, i.e., around 100 nm thick. Such thick ITO coatings tend, depending on the type of residual stress, either to buckle or crack. One of the main reasons for this phenomenon to happen is that the amount of stress increases with layer thickness.

Reducing the oxidation level of a deposited ITO helps mitigating its brittleness to a certain extent, but the process window is quite narrow. Depleting the as-deposited ITO with oxygen beyond a certain level does not allow achieving its desired stoichiometry after the heat activation. This, in turn, compromises its conductivity and visual transmittance.

In that sense, it would be desirable to improve the bendability of low-E coatings implemented in glazing, such as automotive glazing or architectural glazing.

### DESCRIPTION OF THE INVENTION

The present invention provides a solution for the above-mentioned issue by providing a glazing according to independent claim 1, an automotive roof, a windshield, a sidelite window or an architectural window according to claim 10, a vehicle according to claim 11, and a method for manufacturing a glazing according to claim 12. In dependent claims, embodiments of the invention are defined.

The following terminology is used along the whole document to describe features of the invention.

The term "layer", as used in this context, shall include the common definition of the word, i.e.: a sheet, quantity, or thickness of material, typically of some homogeneous substance.

The term "emissivity" or its acronym "ε" is a measure of how much thermal radiation a material's surface, such as an automotive glass roof, emits to its environment. Thermal radiation is electromagnetic radiation that may include both visible radiation (light) and infrared radiation, which is not visible to human eyes. The thermal radiation from very hot objects, for example, is easily visible to the eye. Quantitatively, emissivity is the ratio of the thermal radiation from a surface to the radiation from an ideal black body at the same temperature as given by the Stefan Boltzmann law. This characteristic is unitless and ranges between 0 and 1. It is proportionate to sheet resistance of a low-E coating. The lower the sheet resistance, the lower the emissivity of the product of the invention, such as a roof, a windshield, a sidelite window or an architectural window, can be achieved. A low-E should be understood as an emissivity below or equal to 0.3; and preferably below or equal to 0.2.

Thickness values, unless indicated to the contrary, are geometric thickness values.

"Laminates", in general, are products comprising multiple sheets of thin, relative to their length and width, material, with each thin sheet having two oppositely disposed major faces and typically of a relatively uniform thickness, which are permanently bonded to each other across at least one major face of each sheet.

The term "stack" refers to the arrangement in a pile manner of a plurality of layers. When describing the coating stack, the convention of numbering the coating layers in the order of deposition upon the glass substrate should be used.

Also, throughout this document, when two layers of the coating are described, the one which is the closest to the substrate shall be referred to the bottom layer or the first layer and the subsequent layers shall be referred to second layer, and so on. Likewise, the top layer is the very last layer applied to the coating stack.

As for one individual layer of the coating, the top of an individual layer has to be understood as the side of the layer furthest from the substrate while the bottom has to be understood as the side of the layer which is either in contact with the substrate or oriented towards the substrate in case this layer is not the first layer of the coating stack.

With respect to a second layer located on a first layer in the coating, the term "on" should be understood as including both the option of the first and second layers being in direct contact (i.e. physical contact) and the option of having one or more additional layers located between the first layer and the second layer.

The term "glass" can be applied to many organic and inorganic materials. From a scientific standpoint, "glass" is defined as a state of matter comprising a non-crystalline amorphous solid that lacks the long-range ordered molecular structure of true solids. Glasses have the mechanical rigidity of crystals with the random structure of liquids. The types of glass that may be used include but are not limited to the common soda-lime variety typical of automotive glazing as well as aluminosilicate, lithium aluminosilicate, borosilicate, glass ceramics, and the various other inorganic solid amorphous compositions which undergo a glass transition and are classified as glass. In final products, glass layers may comprise heat absorbing glass compositions as well as infrared reflecting and other types of coatings.

The term "glazing" should be understood as a product comprising at least one layer of a transparent material or substantially transparent material, preferably glass, which serves to provide for the transmission of light and/or to provide for viewing of the side opposite to the viewer and which is intended to be mounted in an opening in a building, vehicle, wall or roof or other framing member or enclosure.

The term "hot bending" when applied to glass layer should be understood as a process involving heating the glass layer to at least the lower end of the glass transition range where plastic deformation can take place. The exact temperature and heating time varies depending on the glass composition and on the complexity of the shape to be achieved. The softened glass is then bent to the desired shape using conventional techniques already described (gravity, press or a combination thereof). Once the glass has been shaped, it undergoes a controlled cooling process until room temperature, to ensure the required stress levels and avoid undesired optical distortions.

A "curved glazing" shall be understood as a glazing where the layer(s) are curved (as a result of a bending process, such as a hot bending process). The terms "curved" and "bent" are understood as synonyms.

When a range of values is provided in the application, it should be understood that the two limiting values of the range are also included. For example, if a range of 20 to 100 nm is provided, the values 20 and 100 nm are also included within the range.

In a first inventive aspect, the present invention provides a curved glazing comprising:
at least one glass layer having a first major surface and a second major surface, and
a low-emissivity coating comprising:
   a barrier layer disposed on at least one of the major surfaces of the at least one glass layer,
   at least one transparent conductive oxide (TCO) layer disposed on top of the barrier layer, and
   a protective layer disposed on top of the transparent conductive oxide layer,
wherein the transparent conductive oxide layer is doped with nitrogen in an amount of at least 1000 ppm.

The present invention provides a glazing having a low-emissivity coating which can be bent to complex shapes without cracking or buckling, respectively in the areas under tension and under compression.

As will be explained below, the addition of nitrogen to the TCO layer is beneficial in delaying the oxidation and, thus, crystallization of the TCO layer. Instead of quickly crystalizing, the TCO layer stays substantially amorphous for a longer period of time. This allows hot bending the glass layer with the low-emissivity coating while the TCO layer stays substantially amorphous, thus avoiding cracking and/or buckling of the TCO layer, even when bending to complex shapes. The TCO layer fully gains its electrical and optical properties after crystallization is completed at a final stage of the hot bending process.

In the context of the invention, to evaluate the complexity associated with the shape of a curved glass layer of the glazing, the inverse process of the bending process is considered. According to said inverse process, the glass layer is bent from target shape to flat. Thus, the inverse process is a flattening process. A finite element model can be implemented for the flattening process and solved by a structural non-linear solver such as Abaqus. The Maximal Compressive Strain (MCS) is defined herein as the maximal area strain that is generated on the mid-surface of the glass layer during the flattening process, that corresponds to the opposite (that is with a minus sign) of the minimal area strain for the bending process. For a point on the mid-surface, area strain corresponds to the sum of maximal and minimal in-plane principal components of the strain tensor for the same point. The finite element model is based on elastic properties of glass. Mid-surface is formally defined as the imaginary surface that is equidistant from outer and inner surfaces of the glass layer.

In an embodiment, evaluation of the MCS value for an actual glass layer of the glazing can be made according to a method comprising the following steps:
(1) Scanning the glass layer surface to obtain a computer file including a cloud of points or a mesh that represents accurately the glass layer surface and size. Any surface of the glass layer may be scanned (i.e. any major surface of the glass layer), preferably a convex major surface of the glass layer, such as the surface intended to be an outer surface of the glazing when the glazing is in an operating position.
(2) Building a continuous surface that interpolates the cloud of points or mesh, for example using a CAD software.
(3) Building a finite element mesh from the obtained surface, the finite element mesh comprising nodes and shell elements, for example triangular and/or quadrilateral shell elements, such as S3 and/or S4 elements in Abaqus. Preferably, the finite element mesh is fine enough for the MCS value to be unchanged if the mesh is further refined.
(4) Associating to the shell elements the elastic properties of glass. In an embodiment, the following properties are used: E-modulus = 70 GPa and Poisson ratio = 0.22.
(5) Rotating the finite element mesh in a way that it be essentially horizontal in the initial state of the analysis.
(6) Defining a static non-linear analysis.
(7) Creating boundary conditions for z-coordinates that will displace each individual node from its original z-coordinate to z=0, wherein z-direction is perpendicular to the horizontal plane. No boundary conditions on x- and y-coordinates are defined, so the shape can unfold in a natural manner during the flattening process, without generating artificial strains. It is allowed to fix x- and y-coordinates for one single node in the center of the finite element mesh to constrain rigid body motion and help convergence.
(8) Running the static non-linear analysis.
(9) Building a field output that is defined as the sum of maximal and minimal in-plane principal strains. MCS value is the maximal value of this field output found in the mid-surface of the glass layer.

In an embodiment, at least one glass layer of the glazing has a Maximal Compressive Strain (MCS) greater than 7.

In an embodiment, every glass layer of the glazing has a Maximal Compressive Strain (MCS) greater than 7. In an embodiment, the glazing has two glass layers and both glass layers have a Maximal Compressive Strain (MCS) greater than 7.

The low-emissivity coating of the present invention comprises a barrier layer and a protective layer. Advantageously, the barrier layer prevents the migration of elements, such as sodium or other alkaline elements, from the at least one glass layer into the TCO layer. At the same time, the protective layer prevents any ingress of elements or compounds from external environment inside the TCO layer as well as adds to its mechanical durability, so that both major surfaces of the TCO layer are protected and covered.

In the present invention, the TCO layer is sandwiched between at least the barrier layer and the protective layer. In some embodiments, the barrier layer and/or the protective layer is/are a dielectric layer. In some embodiments, both the barrier layer and the protective layer are dielectric layers.

In an embodiment, the barrier layer and/or the protective layer are selected from the group comprising SiOx, SiOxNy, TiOx, ZnSnOx, ZnTiOx, ZnZrOx, ZrTiOx, SiZrOx, SiZrTiOx, NbOx and ZrOx.

In an embodiment, the barrier layer and the protective layer have a total thickness between 10 and 200 nm.

The total thickness of the barrier layer and the protective layer is the sum of the thickness of the barrier layer and the thickness of the protective layer.

In an embodiment, the barrier layer and/or the protective layer are selected from the group comprising SiOx, SiOxNy, TiOx, ZnSnOx, ZnTiOx, ZnZrOx, ZrTiOx, SiZrOx, SiZrTiOx, NbOx and ZrOx and the barrier layer and the protective layer have a total thickness between 10 and 200 nm.

In an embodiment, the barrier layer comprises SiOxNy and the protective layer comprises SiOx.

In an embodiment, the at least one TCO layer comprises a plurality of TCO layers.

In an embodiment, the at least one TCO layer is selected from the group comprising indium-tin-oxide, indium-zinc-oxide and indium-gallium-zinc-oxide, preferably indium-tin-oxide.

In an embodiment, the thickness of the at least one TCO layer ranges from 20 to 140 nm.

In an embodiment, the at least one TCO layer is selected from the group comprising indium-tin-oxide, indium-zinc-oxide, indium-gallium-zinc-oxide, preferably indium-tin-oxide and the thickness of the at least one TCO layer ranges from 20 to 140 nm.

The TCO layer thickness can range from 20 to 140 nm for a single TCO layer or for a combination of multiple TCO layers.

Advantageously, when the thickness of at least one TCO layer is in the range 20 to 140 nm, the glazing of the invention ensures no cracking or buckling during bending process.

In embodiments where the TCO layer is a combination of multiple TCO layers, such as an ITO layer combined with a non-ITO layer, such as indium-zinc-oxide (IZO), the IZO layer has a lower conductivity which results in providing a higher sheet resistance and, at the same time, stays amorphous during the hot bending process. This combination may help achieving yet more complex shapes with smaller curvature radii.

In embodiments where the TCO layer is a combination of multiple TCO layers, all the TCO layers may be doped with nitrogen, only some of the TCO layers may be doped with nitrogen or only one of the TCO layers may be doped with nitrogen.

Preferably, the TCO layer is indium-tin-oxide since indium-tin-oxide provides optical transparency, electrical conductivity, sheet resistance performances and hardwearing durability thanks to its chemical stability.

In an embodiment, the at least one TCO layer is crystalline, amorphous and/or a combination thereof.

In an embodiment, the index of refraction of the at least one TCO layer ranges from 1.8 to 2.4 measured at 550 nm. In an embodiment, the TCO layer is ITO, having an index of refraction ranging from 1.8 to 2.1 measured at 550 nm.

In an embodiment, the optical bandgap of the at least one TCO layer, preferably ITO layer, ranges between 3.5 and 4.3 eV.

An optical bandgap refers to the energy range in which a material does not absorb light. This means that light, in the form of photons, can pass through the material without being absorbed. This is what allows light to be transmitted through a material, such as a window or a roof.

In an embodiment, the bulk resistivity of the at least one TCO layer, preferably ITO layer, ranges between 1.6 × 10⁻⁴ and 7 × 10⁻³ Ohm-cm.

In an embodiment, the sheet resistance of the low-E coating is lower than 30 Ohms/square.

In an embodiment, the low-emissivity coating comprises one or more additional layers that may provide additional functions, such as a color correction layer.

In an embodiment, the glazing comprises one or more additional layers that may provide additional functions, such as a color correction layer.

In an embodiment, the at least one glass layer comprises a single glass layer. In an embodiment, when the glazing comprises only one glass layer, the low-emissivity coating is disposed on the first major surface or the second major surface of the glass layer.

In an embodiment, in an operating position of the glazing with the glazing mounted as part of a vehicle or building, the first major surface of the glass layer is intended to face the exterior of the vehicle or building and the second major surface of the glass layer is intended to face the interior of the vehicle or building. In an embodiment, the low-emissivity coating is disposed on the second major surface of the glass layer.

In an embodiment, the at least one glass layer comprises a first glass layer and a second glass layer, each glass layer having a first major surface and a second major surface, and the glazing comprises a plastic bonding layer between the first glass layer and the second glass layer. In other words, in an embodiment, the glazing comprises two layers of glass laminated together.

In an embodiment, the second major surface of the first glass layer is oriented towards the first major surface of the second glass layer, and the low-emissivity coating is disposed on the second major surface of the second glass layer.

In an embodiment, in an operating position of the glazing with the glazing mounted as part of a vehicle or building, the first major surface of the first glass layer is intended to face the exterior of the vehicle or building and the second major surface of the second glass layer is intended to face the interior of the vehicle or building.

In an embodiment, the glazing of the invention is an automotive glazing.

In an embodiment, the glazing of the invention is an architectural glazing.

In a second inventive aspect, the present invention provides a method for manufacturing a glazing, the method comprising the following steps:
a) providing at least one glass layer having a first major surface and a second major surface;
b) providing a barrier layer on at least one of the major surfaces of the at least one glass layer;
c) providing at least one transparent conductive oxide layer on top of the barrier layer in presence of a nitrogen doping material;
d) providing a protective layer on top of the transparent conductive oxide layer; and
e) hot bending the product resulting from step d);
wherein the amount of nitrogen in the transparent conductive oxide layer after step e) is of at least 1000 ppm.

The barrier layer, the at least one transparent conductive oxide layer and the protective layer configure a low-emissivity coating.

The present invention provides a method that allows bending a low-emissivity coating to complex shapes without cracking or buckling. This is achieved by providing a transparent conductive oxide (TCO) layer doped with nitrogen and subsequently converting, via post-deposition thermal activation, the doped TCO layer into a TCO layer having a typical stoichiometry for a sufficiently oxidized TCO having a high bulk conductivity. According to the invention, the thermal activation occurs during the hot bending process.

Adding nitrogen to the TCO layer, such as ITO, during its deposition in step c) prevents the TCO layer of the invention from crystallizing at the initial stages of the hot bending process performed in step e). In other words, the process of crystallization is delayed since the oxidation process of the TCO layer is slowed down. Therefore, the resultant low-emissivity coating including the barrier layer, the TCO layer and the protective layer is less susceptible to cracking and buckling during the hot bending process.

When the TCO layer is doped with nitrogen, during the deposition of the TCO layer some nitrogen atoms occupy other atoms sites of the TCO crystal lattice, such as tin (Sn) and indium (In) sites in an ITO layer crystal lattice when the TCO is ITO, some nitrogen atoms go interstitially inside the TCO crystal lattice and some other nitrogen atoms bond with oxygen atoms.

During the process of oxidation of the TCO layer, nitrogen atoms compete with oxygen atoms for occupying the oxygen sites in the TCO crystal lattice. By tuning the nitrogen concentration and deposition parameters, such as the flow ratio of a nitrogen reactive gas, for example a mixture of O₂/N₂, the process can be optimized in such a way that the TCO layer reaches its optimal oxidation not at the beginning or in the middle but at the end of the hot bending process. For example, in a hot bending process using a temperature ramp, according to which the temperature increases from an initial temperature, e.g. room temperature, up to a final temperature suitable for bending the glass layer (for example in the range of 550-700°C), the crystallization of the TCO layer would be completed when the temperature reaches above 550°C (thus corresponding to the final stage of the hot bending process). Consequently, the TCO layer, such as ITO, stays in an amorphous state during a longer period of time, which makes said layer less susceptible to crackling and/or buckling during hot bending.

In other words, the use of nitrogen promotes the TCO layer, such as ITO, to stay substantially amorphous during the initial stages of the hot bending process, thus mitigating the probability of cracking and/or buckling. When the TCO layer doped with nitrogen is thermally activated by the temperatures provided during the hot bending process, nitrogen atoms are largely replaced by oxygen atoms, resulting in the TCO layer gaining its stoichiometry which is typical for a sufficiently oxidized TCO having a high bulk conductivity. Thermal activation process overlaps with the hot bending process so that said thermal activation takes profit of the temperature required for performing the hot bending and both processes are successfully completed while providing a curved glazing with a TCO layer less susceptible to crackling and/or buckling. The nitrogen atoms replaced by oxygen atoms are agglomerated at dimensional defects, such as dislocations and grain boundaries and become functionally inert. The nitrogen content is detectable by a destructive layer analysis.

Therefore, the present invention provides a glazing having a low-emissivity coating which can be bent to complex shapes without cracking or buckling, respectively in the areas under tension and under compression.

The addition of nitrogen to the TCO layer is beneficial in delaying the oxidation and, thus, crystallization of the TCO layer during hot bending. Instead of quickly crystalizing, therefore, the TCO layer stays substantially amorphous for a longer period of time. This allows bending the glass layer with the low-emissivity coating while the TCO layer stays substantially amorphous, thus avoiding cracking and/or buckling of the TCO layer. The TCO layer fully gains its electrical and optical properties after crystallization at a final stage of the hot bending process. The exact optimal nitrogen concentration in the TCO layer depends on a number of factors which include, but are not limited to, the type and chemical composition of glass, bending temperature and bending method, the presence or absence of any functional coating on the glass layer, etc.

Advantageously, when a bending step is initiated while the TCO layer is substantially amorphous, the probability of cracking and/or buckling of the TCO layer is reduced even when the glass layer with the low-emissivity coating is bent to a complex shape. This is achieved by the addition of nitrogen to the TCO layer, which allows delaying the oxidation and crystallization of the TCO layer during hot bending. Thus, instead of quickly crystalizing, the layer stays substantially amorphous for a longer period of time and the TCO layer fully gains its electrical and optical properties after crystallization at a final stage of the bending process. The method of the second inventive aspect of the invention allows keeping the TCO layer in an amorphous state during a longer period of time than a TCO layer which has not been exposed to nitrogen doping material while deposited.

The barrier layer provided in step b) is deposited on a major surface of the at least one glass layer in order to protect further layer(s) to be deposited on the barrier layer from any element diffused from the at least one glass layer towards the other layer(s) of the stack formed by the glazing of the invention. In a particular embodiment, where the glazing is a laminated glazing, the barrier layer provided in step b) is preferably deposited on the second major surface of the second glass layer.

During step c), the TCO layer is deposited on top of the barrier layer in presence of a nitrogen doping material. By adding nitrogen while the TCO layer is deposited, nitrogen atoms compete with oxygen atoms for occupying the oxygen sites of the TCO crystal lattice. This phenomenon, created by the nitrogen doping, helps making the TCO layer less crystalline and, thus, slowing down the oxidation process. By slowing down the oxidation process of the TCO layer during the thermal activation occurring during the hot bending step, said layer benefits from the nitrogen doping by avoiding cracking and/or buckling.

That is, it is at the end of the hot bending process of the glazing of the invention when the oxidation of the TCO layer is completed. Thanks to the nitrogen doping material, the oxidation process is slowed down at the beginning of the hot bending process. The method of the second inventive aspect of the invention takes advantage of keeping the TCO layer in an amorphous state during a longer period of time than a TCO layer which has not been exposed to nitrogen doping material while deposited.

In some embodiments, nitrogen can be premixed with oxygen before entering a depositing chamber, such as a sputtering chamber, or be used as a tuning gas. The stoichiometry of the deposited TCO layer may be tuned to enable the highest electrical conductivity after the hot bending process.

In an embodiment, the nitrogen doping material is selected from the group comprising nitrogen reactive gas, nitrous oxide, ammonia and methylamines, preferably a nitrogen reactive gas.

In an embodiment, the nitrogen reactive gas is argon-oxygen-nitrogen atmosphere and/or argon-nitrogen atmosphere.

In an embodiment, the nitrogen doping material is a nitrogen reactive gas, for example a mixture of O₂/N₂. In an embodiment, the flow ratio of O₂/N₂ is 1 to 5, more preferably 2 to 4.

In an embodiment, steps b) to d) are performed by sputter deposition, electron-beam deposition, ion-beam deposition, physical vapor deposition (PVD), chemical-vapor deposition (CVD) or plasma-enhanced vapor deposition (PECVD), preferably sputter deposition.

In an embodiment, step e) is performed with a source of heat or with a source of radiative energy, or a combination of both.

In an embodiment, step e) comprises heating the glass layer provided with the low-emissivity coating at a temperature in the range from 550 to 700°C, preferably in the range from 610°C to 670°C. This temperature is suitable for thermally activating the low-emissivity coating.

In an embodiment, step e) comprises applying a temperature ramp, such that the temperature increases from an initial temperature up to a final temperature. In an embodiment, the initial temperature is room temperature. In an embodiment, the final temperature is in the range of 550-700°C, preferably from 610°C to 670°C.

In an embodiment, step e) comprises applying a temperature ramp and the thermal activation is initiated during the temperature ramp of the hot bending process. In an embodiment, the thermal activation initiates at a temperature of at least 550°C.

In an embodiment, the glazing comprises a first glass layer and a second glass layer and in step e) both glass layers are bent as a pair and laminated. In another embodiment, the glazing comprises a first glass layer and a second glass layer and step e) comprises bending each glass layer separately. In an embodiment, the method comprises laminating together the two bent glass layers after cooling thereof.

In an embodiment, the barrier layer and/or the protective layer are selected from the group comprising SiOx, SiOxNy, TiOx, ZnSnOx, ZnTiOx, ZnZrOx, ZrTiOx, SiZrOx, SiZrTiOx, NbOx and ZrOx.

In an embodiment, the barrier layer and the protective layer have a total thickness between 10 and 200 nm.

In an embodiment the barrier layer and/or the protective layer are selected from the group comprising SiOx, SiOxNy, TiOx, ZnSnOx, ZnTiOx, ZnZrOx, ZrTiOx, SiZrOx, SiZrTiOx, NbOx, ZrOx and have a total thickness between 10 and 200 nm, preferably the barrier layer comprises SiOxNy and the protective layer comprises SiOx.

In an embodiment, the thickness of the TCO layer ranges from 20 to 140 nm.

In this specific range of thickness, the TCO layer may be used as a stand-alone low-E functional layer which helps enabling sufficient low-emissivity levels or either being used in combination with other conductive materials, such as supplementary TCO or metal layer(s).

In an embodiment, the TCO layer is selected from the group comprising indium-tin-oxide, indium-zinc-oxide, indium-gallium-zinc-oxide, preferably indium-tin-oxide.

In an embodiment, the method according to the second inventive aspect is for manufacturing the glazing according to any of the embodiments of the first inventive aspect.

In an embodiment, the glazing according to any of the embodiments of the first inventive aspect is manufactured according to any of the embodiments of the method of the second inventive aspect.

In a third inventive aspect, the invention provides an automotive roof, windshield, sidelite window or an architectural window comprising at least one glazing according to any one of the embodiments of the first inventive aspect.

In a fourth inventive aspect, the invention provides a vehicle comprising at least one glazing according to any one of the embodiments of the first inventive aspect or an automotive roof, windshield or sidelite window according to any one of the embodiments of the third inventive aspect or a vehicle comprising a glazing manufactured according to any of the embodiments of the second inventive aspect.

The term "vehicle" in the present invention includes, but is not limited to, road vehicles (e.g. cars, busses, trucks, agricultural and construction vehicles, cabin motorbikes), railway vehicles (e.g. locomotives, coaches), aircraft (e.g. airplanes, helicopters), boats, ships and the like. For instance, the vehicle may be a road vehicle and more particularly a car.

In an embodiment, the glazing comprises a single glass layer and the glazing is arranged in the vehicle with the second major surface of the glass layer facing the interior of the vehicle, wherein the low-emissivity coating is arranged on the second major surface of the glass layer.

In an embodiment, the glazing comprises a first glass layer and a second glass layer and the glazing is arranged in the vehicle with the first major surface of the first glass layer facing the exterior of the vehicle and with the second major surface of the second glass layer facing the interior of the vehicle, wherein the low-emissivity coating is disposed on the second major surface of the glass layer.

All the features described in this specification (including the claims, description and drawings) can be combined in any combination, with the exception of combinations of mutually exclusive features and/or steps.

### DESCRIPTION OF THE DRAWINGS

These and other features and advantages of the invention will be seen more clearly from the following detailed description of a preferred embodiment provided only by way of illustrative and non-limiting example in reference to the attached drawings.
- Figure 1: This figure schematically shows a side view of a glazing comprising a low-emissivity coating according to an embodiment of the present invention.
- Figure 2: This figure schematically shows a side view of a glazing comprising a low-emissivity coating according to an embodiment of the present invention.
- Figure 3: This figure schematically shows a side view of a glazing comprising a low-emissivity coating according to an embodiment of the present invention.
- Figure 4: This figure schematically depicts the process of crystallization of an ITO layer and an ITO layer doped with nitrogen with respect to the bending temperature.
- Figure 5: This figure shows a roof comprising a glazing according to an embodiment of the present invention.
- Figure 6a to 6c: These figures show a comparison between a curved glazing of the state of the art and a curved glazing according to an embodiment of the present invention.

### DETAILED DESCRIPTION OF THE INVENTION

The present invention provides a glazing (1) comprising at least one glass layer (2, 2.1, 2.2), each at least one glass layer (2, 2.1, 2.2) having a first major surface (201, 203) and a second major surface (202, 204). The glazing (1) also comprises a low-emissivity coating (3) comprising a barrier layer (3.1) disposed on at least one of the major surfaces of the at least one glass layer (2, 2.1, 2.2), at least one transparent conductive oxide (TCO) layer (3.2) disposed on top of the barrier layer (3.1), and a protective layer (3.3) disposed on top of the at least one transparent conductive oxide layer (3.2). The at least one transparent conductive oxide layer (3.2) of the glazing (1) of the present invention is doped with nitrogen in an amount of at least 1000 ppm.

In an embodiment, the barrier layer (3.1) and/or the protective layer (3.3) are selected from the group comprising SiOx, SiOxNy, TiOx, ZnSnOx, ZnTiOx, ZnZrOx, ZrTiOx, SiZrOx, SiZrTiOx, NbOx, ZrOx and the barrier layer (3.1) and the protective layer (3.3) have a total thickness between 10 and 200 nm.

In a particular embodiment, the barrier layer (3.1) comprises SiOxNy and the protective layer (3.3) comprises SiOx.

In an embodiment, the at least one transparent conductive oxide layer (3.2) is selected from the group comprising indium-tin-oxide, indium-zinc-oxide, indium-gallium-zinc-oxide, preferably indium-tin-oxide.

In an embodiment, the at least one transparent conductive oxide layer (3.2) is crystalline, amorphous and/or a combination thereof.

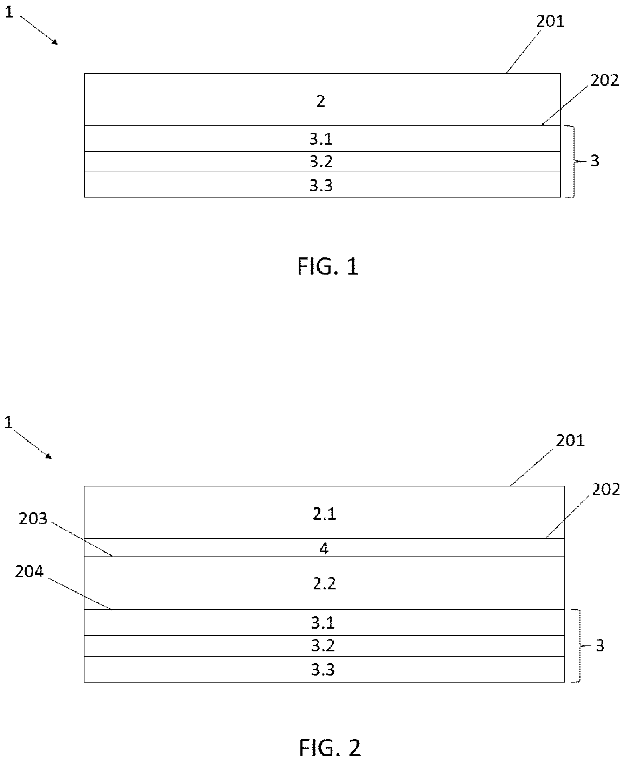

In the embodiment shown in Figure 1, the glazing (1) is a monolithic glazing, that is it only comprises one glass layer (2). The glass layer (2) has a first major surface (201) and a second major surface (202). In the embodiment of Figure 1, the low-emissivity coating (3) is disposed on the second major surface (202) of the glass layer (2). In an embodiment, in an operating position of the glazing with the glazing mounted as part of a vehicle or building, the first major surface (201) of the glass layer (2) faces the exterior of the vehicle or building and the second major surface (202) of the glass layer (2) faces the interior of the vehicle or building.

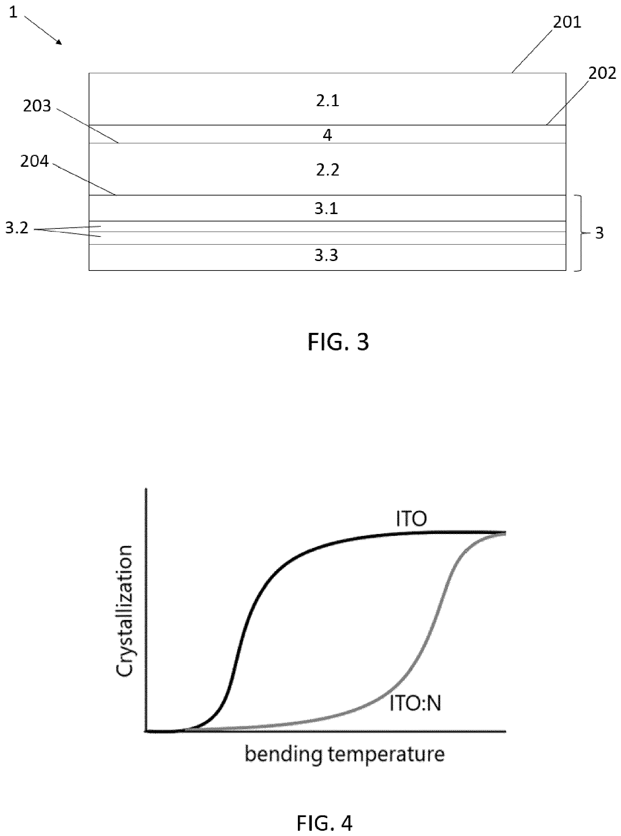

In the embodiments shown in Figures 2 and 3, the glazing (1) comprises a first glass layer (2.1) and a second glass layer (2.2). The glazing (1) of said embodiments comprises a plastic bonding layer (4) arranged between the first glass layer (2.1) and the second glass layer (2.2). The first glass layer (2.1) has a first major surface (201) and a second major surface (202). The second glass layer (2.2) has a first major surface (203) and a second major surface (204). As shown in the embodiments of Figures 2 and 3, the second major surface (202) of the first glass layer (2.1) is oriented towards the first major surface (203) of the second glass layer (2.2).

In both embodiments of Figures 2 and 3, the low-emissivity coating (3) is disposed on the second major surface (204) of the second glass layer (2.2). In an embodiment, in an operating position of the glazing with the glazing mounted as part of a vehicle or building, the first major surface (201) of the first glass layer (2.1) faces the exterior of the vehicle or building and the second major surface (204) of the second glass layer (2.2) faces the interior of the vehicle or building.

In an embodiment, the thickness of the at least one transparent conductive oxide layer (3.2) ranges from 20 to 140 nm. In particular, figures 1 and 2 show embodiments of the glazing (1) comprising one TCO layer (3.2) and figure 3 depicts an embodiment of the glazing (1) of the invention where the glazing (1) has two TCO layers (3.2). In both embodiments of figures 1 and 2, and in the embodiment of figure 3, the total thickness of the TCO layers (3.2) of the glazing is comprised in the range from 20 to 140 nm.

In an embodiment, the index of refraction (IOR) of the at least one TCO layer, preferably an indium-tin-oxide layer (3.2), ranges from 1.8 to 2.1 measured at 550 nm.

In an embodiment, the optical bandgap of the at least one TCO layer (3.2), preferably an indium-tin-oxide layer, ranges between 3.5 and 4.3 eV.

In an embodiment, the bulk resistivity of the at least one TCO layer, preferably an indium-tin-oxide layer (3.2), ranges between 1.6 × 10⁻⁴ and 7 × 10⁻³ Ohm-cm.

In an embodiment, the sheet resistance of the low-emissivity coating (3) is lower than 30 Ohms/sq.

In an embodiment, the TCO layer (3.2) is ITO having an index of refraction ranging from 1.8 to 2.1 measured at 550 nm, an optical band gap ranging between 3.5 and 4.3 eV and a bulk resistivity between 1.6 × 10⁻⁴ and 7 × 10⁻³ Ohm-cm.

In an embodiment, the glazing (1) further comprises a color correction layer such as a NbOx layer. Preferably, the thickness of the color correction layer is between 10 and 30 nm. In an embodiment, the correction layer is deposited between the TCO layer (3.2) and the protective layer (3.3) of the glazing (1). In this particular embodiment, the correction layer is considered as part of the low-emissivity coating (3).

In a specific embodiment of a glazing (1) comprising a first glass layer (2.1) and a second glass layer (2.2), the low-e coating is deposited on the second glass layer (2.2), the second glass layer (2.2) having a thickness of 2.1 mm and being made of clear glass. The low-e coating deposited has a barrier layer (3.1), a TCO layer (3.2) and a protective layer (3.3). The TCO layer (3.2) of the glazing (1) is an ITO layer, 110 nm thick, which has been sputter deposited in an argon-oxygen-nitrogen atmosphere on the second glass layer (2.2). The ITO layer is surrounded by the barrier layer (3.1) and the protective layer (3.3) where both of these layers are dielectric layers located on both sides of the ITO layer (3.2). Preferably, the barrier layer (3.1) is a silicon-oxi-nitride (SiOxNy) and the protective layer (3.3) is a silicon oxide (SiOx). Then, the thermal activation occurs during the hot bending process and afterwards, the laminate is assembled. The laminate is formed by the first glass layer (2.1) and the second glass layer (2.2), both glass layers (2.1, 2.2) are bonded with a bonding layer (4). In the laminate, the low-e coating has been deposited on the second major surface (204) of the second glass layer (2.2). After the thermal activation occurred during the hot bending process, the ITO layer (3.2) has a bulk resistivity of less than 3 x 10⁻⁴ Ohm-cm. The Index of Refraction (IOR) of the glazing (1) is 1.95 at 550 nm. Also, the amount of nitrogen detected in the ITO layer (3.2) after the hot bending process is at least 1000 ppm.

With respect to a glazing of the art, which comprises a TCO layer not doped with nitrogen, the glazing (1) of the invention is less susceptible to crack and/or buckle when undergoing the bending process.

The glazing (1) of the embodiments of figures 1, 2 and 3 are manufactured following the method of manufacturing a glazing according to the second aspect of the invention.

The method comprises the following steps:
a) providing at least one glass layer (2, 2.1, 2.2) having a first major surface (201, 203) and a second major surface (202, 204);
b) providing a barrier layer (3.1) on at least one of the major surfaces (201, 202, 203, 204) of the at least one glass layer (2, 2.1, 2.2);
c) providing a transparent conductive oxide layer (3.2) on top of the barrier layer (3.1) in presence of a nitrogen doping material;
d) providing a protective layer (3.3) on top of the transparent conductive oxide layer (3.2); and
e) hot bending the product resulting from step d);
wherein the amount of nitrogen in the transparent conductive oxide layer (3.2) after step e) is of at least 1000 ppm.

In an embodiment of the method of the invention, the nitrogen doping material is selected from the group comprising nitrogen reactive gas, nitrous oxide, ammonia and methylamines, preferably a nitrogen reactive gas.

Also in an embodiment of the method, steps b) to d) are performed by sputter deposition, electron-beam deposition, ion-beam deposition, chemical-vapor deposition or plasma-enhanced vapor deposition, preferably sputter deposition.

In an embodiment, step e) is performed with a source of heat or radiative energy, or a combination of both.

In an embodiment, step e) comprises heating at a temperature from 550°C to 700°C, particularly from 610 °C to 670 °C.

In an embodiment, step e) comprises applying a temperature ramp from an initial temperature not suitable for bending to a final temperature suitable for hot bending. The resulting glazing from step d) is subjected to the temperature ramp, which initiates thermal activation of the low-emissivity coating and when the temperature reaches hotter temperatures, the glazing is bent. In yet another embodiment, thermal activation and bending take place at the same temperature range.

Figure 4 depicts a graphic comparing the crystallization process of two TCO layers, in particular two ITO layers, as a function of temperature during a hot bending process also used for thermal activation of the low-emissivity coating. In said graphic, the black curve shows the crystallization behaviour of a common ITO layer and the grey curve shows the crystallization behaviour of an ITO layer doped with nitrogen (ITO:N) as the one implemented in the glazing of the invention and where the amount of nitrogen in the ITO layer is of at least 1000 ppm.

As shown in figure 4, as the temperature increases during the bending process, the common ITO layer starts crystallizing at an earlier stage, i.e. at a significantly lower temperature, than the ITO:N layer. In particular, an ITO:N layer would start crystallizing at a moment when a common ITO layer would have already reached its final crystallized state. As detailed in the present document, by adding at least 1000 ppm of nitrogen in the TCO layer comprised in the glazing of the invention, the process of crystallization is slowed down and allows the TCO layer to be less susceptible to crack and/or buckle while performing its bending. As a comparative, a glazing comprising a common ITO layer, as the one of the black curve of Figure 4, would show cracking and defects after bending such as buckling under compression, voids or tear lines formation.

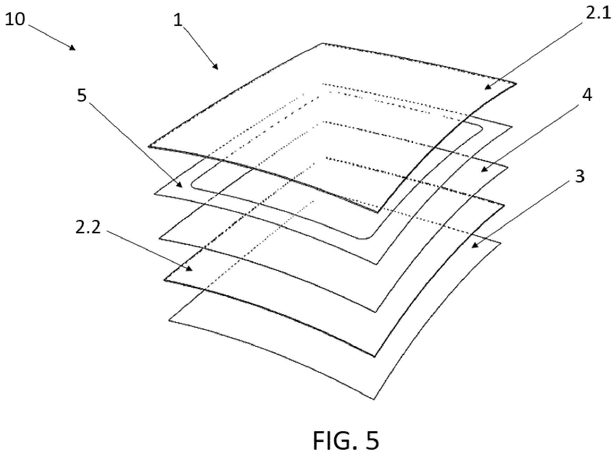

Figure 5 shows an embodiment of a roof (10) comprising a glazing (1) according to an embodiment of the invention. In this particular embodiment, the glazing (1) comprises a first glass layer (2.1), a second glass layer (2.2), a plastic bonding layer (4) and a low-emissivity coating (3) located on the second major surface of the second glass layer (2.2). In this embodiment, the glazing (1) further comprises black paint, also called frit (5), located in between the first glass layer (2.1) and the bonding layer (4).

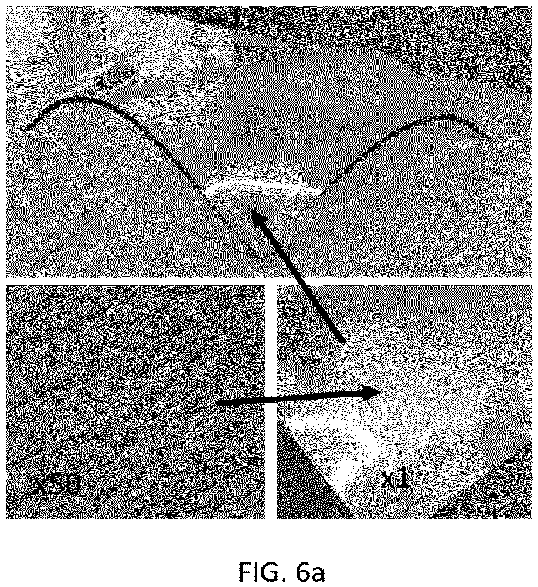

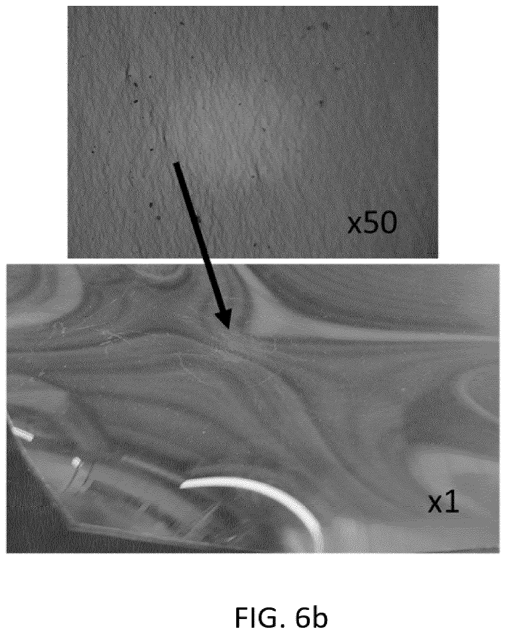

Figure 6a to 6c are pictures showing a comparison between a common glazing of the state of the art after performing a bending process, as shown in figure 6a and 6b, and a glazing (1) according to an embodiment of the invention after performing a bending process.

In figure 6a, a curved glazing and two enlarged views of a detail thereof are shown. Said curved glazing does not comprise a TCO layer doped with nitrogen which results in the formation of buckling defects when under compression. In this case, the buckling is visible at a corner of the glazing of the state of the art.

In figure 6b, a portion of the same curved glazing of figure 6a and an enlarged detail thereof are shown. Said curved glazing shows cracking defects under tension, visible as voids in the picture at the top of figure 6b.

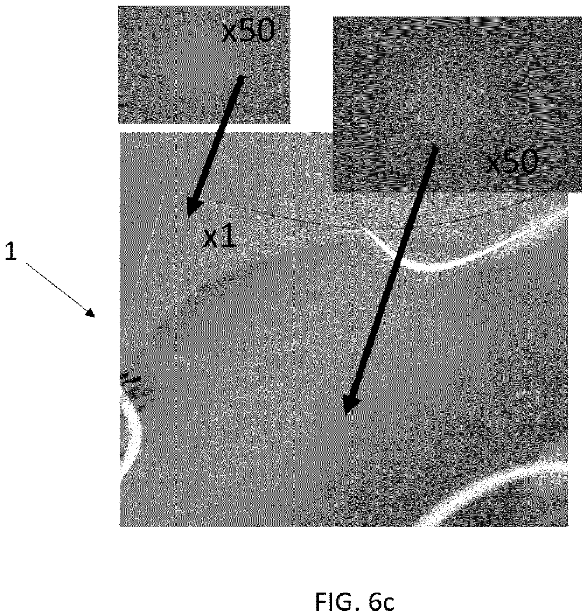

Figure 6c shows a picture of a curved glazing (1) according to an embodiment of the invention and enlarged views of two details thereof. In this particular case, thanks to the TCO layer including nitrogen in an amount of at least 1000 ppm and thermally activated, the glazing (1) does not show any buckling defects in the corner where the glazing (1) may suffer compression neither any cracking defects in the center where the glazing (1) may suffer traction.

## Claims

1. A curved glazing (1) comprising:
at least one glass layer (2, 2.1, 2.2) having a first major surface (201, 203) and a second major surface (202, 204), and
a low-emissivity coating (3) comprising:
a barrier layer (3.1) disposed on at least one of the major surfaces of the at least one glass layer (2),
at least one transparent conductive oxide layer (3.2) disposed on top of the barrier layer (3.1), and
a protective layer (3.3) disposed on top of the at least one transparent conductive oxide layer (3.2),
wherein the transparent conductive oxide layer (3.2) is doped with nitrogen in an amount of at least 1000 ppm.

2. The curved glazing (1) of claim 1, wherein the barrier layer (3.1) and/or the protective layer (3.3) are selected from the group comprising SiOx, SiOxNy, TiOx, ZnSnOx, ZnTiOx, ZnZrOx, ZrTiOx, SiZrOx, SiZrTiOx, NbOx and ZrOx and wherein the barrier layer (3.1) and the protective layer (3.3) have a total thickness between 10 and 200 nm.

3. The curved glazing (1) of any of the preceding claims, wherein the barrier layer (3.1) comprises SiOxNy and the protective layer (3.3) comprises SiOx.

4. The curved glazing (1) of any of the preceding claims, wherein:
- the at least one transparent conductive oxide layer (3.2) is selected from the group comprising indium-tin-oxide, indium-zinc-oxide and indium-gallium-zinc-oxide, preferably indium-tin-oxide; and/or
- the at least one transparent conductive oxide layer (3.2) has a thickness between 20 and 140 nm.

5. The curved glazing (1) of any of the preceding claims, wherein the at least one transparent conductive oxide layer (3.2) is crystalline, amorphous and/or a combination thereof.

6. The curved glazing (1) of any of the preceding claims, wherein the index of refraction of the transparent conductive oxide layer (3.2) ranges from 1.8 to 2.4 measured at 550 nm.

7. The curved glazing (1) of any of the preceding claims, wherein the sheet resistance of the low-emissivity coating (3) is lower than 30 Ohms/sq.

8. The curved glazing (1) of any of the preceding claims, wherein at least one glass layer (2, 2.1, 2.2) of the glazing (1) has a Maximal Compressive Strain (MCS) greater than 7.

9. The curved glazing (1) of any of the preceding claims, wherein the at least one glass layer comprises a first glass layer (2.1) and a second glass layer (2.2), each having a first major surface (201, 203) and a second major surface (202, 204), and wherein the glazing (1) comprises a plastic bonding layer (4) between the first glass layer (2.1) and the second glass layer (2.2), wherein:
- the second major surface (202) of the first glass layer (2.1) is oriented towards the first major surface (203) of the second glass layer (2.2), and
- the low-emissivity coating (3) is disposed on the second major surface (204) of the second glass layer (2.2).

10. An automotive roof (10), a windshield, a sidelite window or an architectural window comprising a curved glazing (1) according to any of the preceding claims.

11. A vehicle comprising a roof (10), a windshield or a sidelite window according to the preceding claim.

12. A method for manufacturing a curved glazing (1), for example for manufacturing a curved glazing according to any of claims 1 to 9, the method comprising the following steps:
a) providing at least one glass layer (2, 2.1, 2.2) having a first major surface (201, 203) and a second major surface (202, 204);
b) providing a barrier layer (3.1) on at least one of the major surfaces (201, 202, 203, 304) of the at least one glass layer (2, 2.1, 2.2);
c) providing at least one transparent conductive oxide layer (3.2) on top of the barrier layer (3.1) in presence of a nitrogen doping material;
d) providing a protective layer (3.3) on top of the transparent conductive oxide layer (3.2); and
e) hot bending the product resulting from step d);
wherein the amount of nitrogen in the transparent conductive oxide layer (3.2) after step e) is of at least 1000 ppm.

13. The method according to claim 12, wherein the nitrogen doping material is selected from the group comprising nitrogen reactive gas, nitrous oxide, ammonia and methylamines, preferably a nitrogen reactive gas.

14. The method according to any of claims 12 to 13, wherein steps b) to d) are performed by sputter deposition, electron-beam deposition, ion-beam deposition, chemical-vapor deposition or plasma-enhanced vapor deposition, preferably sputter deposition.

15. The method according to any of claims 12 to 14, wherein step e) comprises heating at a temperature from 550°C to 700°C.
